# DEMANDE DE BREVET EUROPEEN

(11) **EP 3 168 029 A1**
(43) Date de publication de la demande: **17.05.2017**
(21) Numéro de dépôt: 16195774.1
(22) Date de dépôt: 26.10.2016
(51) Int. Cl.: B29C 47/08, B29C 47/20, B29C 67/00

(54) **OUTIL D'EXTRUSION; PROCÉDÉ DE FABRICATION ET MÉTHODE D'UTILISATION DE L'OUTIL.**

(30) Priorité: 13.11.2015 BE 201505740
(71) Demandeur: INEXCO EUROPE, 4700 Eupen (BE)
(72) Inventeur: Klinkenberg, Ralf, 4700 Eupen (BE)
(74) Mandataire: Gevers Patents

(57) **Abrégé**

La présente invention concerne un outil d'extrusion (20) qui comporte un corps d'outil (21), une filière (22), un ou plusieurs pointeaux (23) et des bras (24) servant à fixer le pointeau (23) au corps d'outil (21). Les bras (24) sont particulièrement minces, de façon à minimiser la déformation d'un flot de matière passant dans l'outil d'extrusion, ce qui permet à l'outil d'extrusion (20) d'être particulièrement petit et léger. En outre, les pointeaux peuvent être décalés par rapport à un axe (39) de révolution d'une surface interne du corps d'outil (21). L'outil d'extrusion (20) selon l'invention est préférentiellement fabriqué par impression 3D.

## Description

### Domaine technique

La présente invention concerne un outil d'extrusion. Plus précisément, la présente invention concerne un outil d'extrusion destiné à la fabrication de pièces extrudées en mousse à partir d'un flux de matière mousseuse.

### Art antérieur

Le document FR1462678 divulgue un outil d'extrusion destiné à la fabrication de pièces extrudées à partir d'un flux de matière. Cet outil d'extrusion présente une entrée pour recevoir un flux de matière et une sortie pour permettre une sortie du flux de matière au-dehors de l'outil d'extrusion. Cet outil d'extrusion comprend un corps d'outil creux, un pointeau situé dans le creux du corps d'outil, une pluralité de bras fixant le pointeau au corps d'outil et une filière fixée à une extrémité de sortie du corps d'outil, la filière et le pointeau étant destinés à mettre en forme le flux de matière à la sortie de l'outil d'extrusion pour donner une forme définie à une pièce extrudée.

Le flux de matière dans un tel outil d'extrusion connu est influencé par les bras de l'outil d'extrusion qui créent une inhomogénéité dans la structure du flux de matière. La pièce extrudée par l'outil d'extrusion connu peut alors présenter une certaine inhomogénéité aux endroits correspondant aux bras de l'outil d'extrusion. En outre, la structure du flux de matière peut être modifiée entre l'entrée et la sortie de l'outil d'extrusion. Cela est particulièrement dommageable dans le cas d'une matière mousseuse à cause de la structure cellulaire fragile de la mousse.

L'invention a pour but de proposer un outil d'extrusion permettant de réduire l'influence de l'outil d'extrusion sur l'homogénéité du flux de matière le traversant afin de pouvoir extruder une matière mousseuse pour la fabrication de pièces extrudées en mousse.

### Résumé de l'invention

A cet effet, selon un premier aspect de l'invention, l'invention propose un outil d'extrusion pour extruder une matière et comprenant:
- une entrée pour recevoir un flux de matière,
- une sortie pour permettre une sortie dudit flux de matière au-dehors dudit outil d'extrusion,
ledit outil d'extrusion comprenant:
- un corps d'outil creux ayant:
   ∘ une extrémité d'entrée pour permette au flux de matière d'entrer dans ledit corps d'outil creux,
   ∘ une extrémité de sortie pour permette au flux de matière de sortir dudit corps d'outil creux,
   ∘ une surface interne délimitant au moins partiellement le creux dudit corps d'outil creux,
- un pointeau situé au moins partiellement dans le creux dudit corps d'outil creux, et s'étendant jusqu'à ladite sortie de l'outil d'extrusion,
- une pluralité de bras pour coupler mécaniquement ledit pointeau audit corps d'outil creux, chacun desdits bras étant situé au moins partiellement dans le creux dudit corps d'outil creux et couplé mécaniquement à ladite surface interne et audit pointeau, chaque bras ayant une épaisseur,
- une filière située à ladite extrémité de sortie dudit corps d'outil creux et destinée à mettre en forme, avec ledit pointeau, ledit flux de matière à ladite sortie de l'outil d'extrusion,
caractérisé en ce que l'outil d'extrusion présente une longueur d'au moins 0,7 fois une extension maximale en ligne droite de la surface interne du corps d'outil au niveau de l'extrémité d'entrée du corps d'outil, la longueur de l'outil d'extrusion étant mesurée selon une direction essentiellement parallèle à une direction s'étendant de l'entrée à la sortie et l'extension maximale en ligne droite de la surface interne étant mesurée selon une direction perpendiculaire à la direction de mesure de la longueur, et en ce que ladite épaisseur de chaque bras est inférieure à 4 mm, de sorte que l'outil d'extrusion est apte à extruder une matière mousseuse.

Dans l'outil d'extrusion selon l'invention, chaque bras présente une longueur selon une direction essentiellement parallèle à une direction s'étendant de l'entrée à la sortie de l'outil d'extrusion et chaque bras présente une épaisseur qui est une dimension minimale de ce bras déterminée selon une direction perpendiculaire à sa longueur.

Le couplage mécanique entre le pointeau et la surface interne du corps d'outil peut être par exemple réalisé par des bras fixés directement à la fois au pointeau et à la surface interne du corps d'outil. Il peut aussi être réalisé par un réseau de bras dont certains sont fixés au pointeau, certains sont fixés à la surface interne du corps d'outil et d'autres relient les bras fixés aux pointeaux et les bras fixés à la surface interne du corps d'outil.

L'entrée de l'outil d'extrusion se situe préférentiellement à l'extrémité d'entrée du corps d'outil.

La filière a une première extrémité et une deuxième extrémité qui est opposée à la première extrémité de la filière. La première extrémité de la filière est préférentiellement située à l'extrémité de sortie du corps d'outil creux et la deuxième extrémité de la filière est préférentiellement située à la sortie de l'outil d'extrusion.

Dans le cadre du présent document, l'extension maximale en ligne droite de la surface interne du corps d'outil au niveau de l'extrémité d'entrée du corps d'outil est la distance maximale entre deux points quelconques de la surface interne du corps d'outil qui sont situés dans un même plan perpendiculaire à une direction s'étendant de l'entrée à la sortie. L'extension maximale en ligne droite de la surface interne du corps d'outil est en général mesurée dans une direction perpendiculaire à ladite surface interne du corps d'outil.

Les bras de l'outil d'extrusion étant situés dans le creux du corps d'outil, creux dans lequel passe le flux de matière, ces bras déforment le flux de matière. En effet, les bras divisent le flux de matière en plusieurs sous-flux parallèles, qui, juste après les bras, sont séparés par une distance égale à l'épaisseur des bras. Or, il est préférable qu'au moment où le flux de matière sort de l'outil d'extrusion par la sortie, l'influence de la déformation due aux bras sur le flux de matière soit la plus faible possible afin qu'une pièce créée par l'outil d'extrusion soit le plus homogène possible et ainsi porte le moins possible de marques correspondant aux bras.

L'épaisseur de bras de l'outil d'extrusion selon l'invention est de moins de 4mm, ce qui fait que les sous-flux de matière ne sont séparés que par cette courte distance de 4mm juste après les bras. Ces fins bras ont une faible influence sur l'homogénéité du flux de matière à la sortie de l'outil d'extrusion car cette distance de 4mm est aisément comblée dans l'espace séparant les bras de la sortie de l'outil d'extrusion.

Pour que l'espace de 4 mm entre les sous-flux de matière soit comblé au niveau de la sortie, il est nécessaire que l'outil d'extrusion ait une longueur minimale. L'inventeur a trouvé que la longueur de l'outil d'extrusion doit être d'au moins 0,7 fois une extension maximale en ligne droite de la surface interne du corps d'outil au niveau de l'extrémité d'entrée du corps d'outil pour que l'espace entre les sous-flux de matière soit comblé dans le cas d'une matière mousseuse.

Un autre avantage de l'outil d'extrusion selon l'invention est néanmoins qu'il peut avoir une longueur relativement modérée car une courte distance peut suffire pour que l'espace de 4 mm entre les sous-flux de matière soit comblé. Cela permet de limiter sa taille et donc son poids. En effet, de préférence, la longueur du corps d'outil vaut au plus 3,5 fois l'extension maximale en ligne droite de la surface interne au niveau de l'extrémité d'entrée.

En outre, si la matière voyageant à l'intérieur de l'outil a une certaine structure, par exemple une structure cellulaire si la matière est une mousse, la finesse des bras permet de conserver cette structure, ce qui a pour effet une bonne homogénéité de la structure cellulaire des pièces créées par extrusion.

L'inventeur a trouvé qu'il est possible d'avoir des bras de faible épaisseur en utilisant des nouvelles techniques de fabrication, par exemple l'impression 3D, et que des bras aussi fins permettent de minimiser l'influence de l'outil d'extrusion sur l'homogénéité du flux de matière à la sortie de l'outil d'extrusion.

La matière du flux de matière est une matière mousseuse, c'est-à-dire une matière ayant une structure cellulaire. En particulier, une matière mousse comprend des bulles de gaz séparées par des films solides ou liquides. La matière du flux de matière est préférentiellement une matière polymérique mousseuse. La matière peut par exemple être du polystyrène sous forme de mousse, du polyméthacrylate de méthyle sous forme de mousse, du polytéréphtalate d'éthylène amorphe sous forme de mousse, du polychlorure de vinyle sous forme de mousse, du polycarbonate sous forme de mousse, de l'oxyde de polyphénylène modifié sous forme de mousse, du caoutchouc de silicone sous forme de mousse, du polyisobutylène sous forme de mousse, du polyisoprène sous forme de mousse, du polychlorure de vinyle plastifié ou flexible sous forme de mousse, du polyéthylène haute densité sous forme de mousse, du polyéthylène basse densité sous forme de mousse, du polypropylène isotactique sous forme de mousse, du polypropylène copolymère sous forme de mousse, du polytétrafluoroéthylène sous forme de mousse, de l'éthylène-acétate de vinyle sous forme de mousse, du polytéréphtalate d'éthylène sous forme de mousse, du polysulfure de phénylène sous forme de mousse, du nylon 6 sous forme de mousse ou du nylon 66 sous forme de mousse.

La matière mousseuse est liquide lorsqu'elle traverse l'outil d'extrusion, puis se solidifie après la sortie de l'outil d'extrusion, pour donner une pièce extrudée en mousse.

De préférence, l'épaisseur de chaque bras est inférieure à 2mm. Une telle épaisseur permet de diminuer d'autant l'espace entre les sous-flux du flux de matière passant à l'intérieur de l'outil d'extrusion et de conserver d'autant plus l'homogénéité de la structure du flux de matière.

Préférentiellement, l'épaisseur de chaque bras est inférieure à 1 mm. Une telle épaisseur permet de diminuer encore plus l'espace entre les sous-flux du flux de matière passant à l'intérieur de l'outil d'extrusion et de conserver encore plus la structure du flux de matière.

Préférentiellement, le corps d'outil comprend un canal destiné à transporter une flux de gaz et partant de l'extrémité d'entrée du corps d'outil, passant par un bras, passant par le pointeau et débouchant du pointeau à la sortie de l'outil d'extrusion. Un tel canal permet d'envoyer du gaz sous pression dans le trou de la pièce extrudée, à partir de l'extrémité du pointeau située à la sortie de l'outil d'extrusion. Ce gaz permet de donner un aspect lissé à la surface interne du trou de la pièce extrudée créé par le pointeau.

Avantageusement, le pointeau, les bras et le corps d'outil sont d'un seul tenant. Le pointeau d'un seul tenant avec les bras et le corps d'outil rend l'ensemble formé par le pointeau, les bras et le corps d'outil particulièrement solide. De plus, le pointeau d'un seul tenant avec les bras et le corps d'outil est inamovible par rapport aux bras et au corps d'outil, ce qui évite une opération difficile et minutieuse de mise en place du pointeau, ou d'une partie de celui-ci, dans le corps d'outil.

En outre, avantageusement, la filière et le corps d'outil sont d'un seul tenant. La filière d'un seul tenant avec le corps d'outil rend l'ensemble formé par la filière et le corps d'outil particulièrement solide. De plus, la filière d'un seul tenant avec le corps d'outil est inamovible par rapport au corps d'outil, ce qui évite une opération difficile et minutieuse de mise en place de la filière sur le corps d'outil.

Dans une réalisation de l'invention, l'outil d'extrusion comprend une pluralité de pointeaux, chaque pointeau étant couplé mécaniquement à la surface interne du corps d'outil creux par au moins un bras de la pluralité de bras. Chaque pointeau permet de créer par extrusion des pièces avec un trou s'étendant sur toute la longueur de la pièce. Le fait que l'outil d'extrusion comporte plusieurs pointeaux permet que les pièces créées par extrusion comportent plusieurs trous parallèles.

Dans une réalisation de l'invention, l'outil d'extrusion comprend en outre une moyen de stabilisation du pointeau couplant mécaniquement ledit pointeau audit corps d'outil creux, ledit moyen de stabilisation étant situé dans le creux dudit corps d'outil creux et couplé mécaniquement à ladite surface interne et audit pointeau. Un tel moyen de stabilisation permet une meilleure fixation du pointeau au corps d'outil. Cela est notamment utile si le corps d'outil est très long ou si le pointeau comprend une partie inclinée qui pourrait bouger dans le flux de matière.

Préférentiellement, à l'extrémité d'entrée du corps d'outil, la surface interne du corps d'outil est essentiellement un cylindre. La surface interne du corps d'outil cylindrique permet que le flux de matière soit harmonieusement réparti dans le plan perpendiculaire au flux, de façon à s'adapter facilement quelle que soit la forme de la filière et du pointeau à la sortie. Même si le corps d'outil et sa surface interne ne sont cylindriques qu'à proximité de l'entrée du corps d'outil, et donc n'ont d'axe stricto senso qu'à proximité de l'entrée du corps d'outil, il est intéressant de considérer l'axe du corps d'outil, c'est-à-dire l'axe de révolution dudit cylindre, car la direction du flux de matière correspond globalement à cet axe.

Dans une réalisation de l'invention, le pointeau est essentiellement parallèle à un axe de révolution dudit cylindre. Par exemple, la direction du pointeau peut faire un angle de maximum 5° par rapport à cet axe. Le pointeau s'étendant, dans le creux du corps d'outil, jusqu'à la sortie de l'outil d'extrusion, le fait qu'il soit parallèle à l'axe, qui est la direction globale du flux de matière, permet que le pointeau ne soit pas soumis à des forces de la part du flux perpendiculaires à l'axe, forces qui tendraient à modifier l'orientation pointeau, ce qui aurait pour effet de déplacer le trou dans la pièce extrudée.

Dans une réalisation de l'invention, le pointeau est décalé par rapport à l'axe de révolution dudit cylindre. Autrement dit, le pointeau n'est pas situé dans l'axe. Cette disposition de l'outil d'extrusion, avec potentiellement plusieurs pointeaux dont au moins un n'est pas dans l'axe, permet de réaliser des pièces extrudées de formes très difficiles à réaliser avec un pointeau dans l'axe.

Dans une réalisation de l'invention, un premier pointeau est décalé dans une première direction par rapport à l'axe de révolution dudit cylindre et un deuxième pointeau est décalé dans une deuxième direction, différente de la première direction, par rapport à l'axe de révolution dudit cylindre, la première et la deuxième directions étant perpendiculaires à l'axe de révolution dudit cylindre. Une telle disposition des pointeaux dans l'outil d'extrusion permet de réaliser des pièces extrudées de formes très variées, avec notamment des trous de positions très variées.

Dans une autre réalisation de l'invention, au moins une partie du pointeau fait un angle entre 5° et 38° avec un axe de révolution dudit cylindre. Dans cette réalisation de l'invention, l'outil d'extrusion comporte préférentiellement le moyen de stabilisation fixant le pointeau au corps d'outil de façon à empêcher que forces de la part du flux perpendiculaires à l'axe de révolution dudit cylindre ne modifie l'orientation du pointeau.

Suivant les réalisations de l'invention, le ou les pointeaux peuvent être parallèles, sécants ou gauches par rapport à un axe de révolution dudit cylindre.

Avantageusement, l'outil d'extrusion est fabriqué par une méthode de type impression 3D. La fabrication par impression 3D permet de créer des bras d'une épaisseur très faible, comme 4mm, 2mm ou 1 mm, même si le canal est présent dans l'épaisseur de ces bras. L'impression 3D est aussi bon marché par rapport à l'usinage manuel de l'outil d'extrusion. L'impression 3D permet aussi de fabriquer un outil d'extrusion avec un ou des pointeaux placé(s) de façon précise et décalés par rapport à l'axe du corps d'outil, même lorsque les dimensions de l'outil d'extrusion sont faibles. L'impression 3D permet aussi de fabriquer un outil d'extrusion avec un ou des pointeaux faisant un angle significatif par rapport à l'axe du corps d'outil, et de fabriquer aussi potentiellement un moyen de stabilisation du ou des pointeau(x).

Dans une réalisation de l'invention, une partie de l'outil d'extrusion est fabriquée par une méthode de type impression 3D.

Avantageusement, l'outil d'extrusion présente une longueur de moins de 15 cm, préférentiellement de moins de 10cm, la longueur de l'outil d'extrusion étant mesurée selon une direction essentiellement parallèle à une direction s'étendant de l'entrée à la sortie. Avec une telle taille, l'outil d'extrusion selon l'invention est facilement manipulable, notamment pour être mis en place à la sortie d'une extrudeuse.

Selon un deuxième aspect de l'invention, celle-ci inclut une méthode d'utilisation de l'outil d'extrusion selon l'invention pour la fabrication d'une pièce extrudée en mousse.

Dans une réalisation possible de l'invention, la méthode comprend:
- la fourniture d'un outil d'extrusion selon l'invention et comprenant un canal destiné à transporter une flux de gaz et partant de l'extrémité d'entrée du corps d'outil, passant par un bras, passant par le pointeau et débouchant du pointeau à la sortie de l'outil d'extrusion, et
- l'introduction d'un flux de matière mousseuse par l'entrée, et l'introduction d'un flux de gaz dans le canal de façon à créer un transport de gaz depuis une entrée du canal située à l'extrémité d'entrée du corps d'outil vers une sortie du canal située dans le pointeau à la sortie de l'outil d'extrusion.

Selon un troisième aspect de l'invention, celle-ci inclut un procédé comprenant les étapes de:
- conception de l'outil d'extrusion par conception assistée par ordinateur pour créer un fichier comprenant les caractéristiques de l'outil d'extrusion,
- transfert du fichier de l'ordinateur vers une imprimante 3D, et
- impression tridimensionnelle de l'outil d'extrusion par l'imprimante 3D.

L'impression tridimensionnelle implique un procédé de fabrication additive qui fonctionne par ajout de matière aux endroits où de la matière est présente dans l'outil d'extrusion, par empilement de couches successives. L'impression tridimensionnelle est préférentiellement réalisée par une technologie permettant la création d'un outil d'extrusion métallique. L'impression tridimensionnelle peut par exemple être réalisée par l'une des technologies suivantes: modelage par dépôt de matière en fusion, stéréolithographie ou frittage sélectif par laser.

### Brève description des figures

D'autres caractéristiques et avantages de l'invention apparaîtront à la lecture de la description détaillée qui suit pour la compréhension de laquelle on se reportera aux figures annexées parmi lesquelles :
- la figure 1 illustre une extrudeuse comprenant un outil d'extrusion selon l'invention,
- la figures 2a montre une vue en trois dimensions d'un outil d'extrusion selon une première réalisation de la présente invention,
- la figures 2b montre une coupe longitudinale de l'outil d'extrusion selon la première réalisation de la présente invention,
- la figures 2c montre une vue d'une première extrémité de l'outil d'extrusion selon la première réalisation de la présente invention,
- la figures 2d montre une vue d'une deuxième extrémité de l'outil d'extrusion selon la première réalisation de la présente invention,
- la figure 3a montre une coupe longitudinale de l'outil d'extrusion selon la deuxième réalisation de la présente invention,
- la figure 3b montre une vue d'une première extrémité de l'outil d'extrusion selon la deuxième réalisation de la présente invention,
- la figure 3c montre une vue d'une deuxième extrémité de l'outil d'extrusion selon la deuxième réalisation de la présente invention,
- la figure 4 montre une coupe longitudinale de l'outil d'extrusion selon une troisième réalisation de l'invention,
- la figure 5a illustre une coupe longitudinale de l'outil d'extrusion selon une quatrième réalisation de l'invention,
- la figure 6 illustre les étapes d'un procédé de fabrication par de l'outil d'extrusion selon l'invention,
- la figure 7a illustre une vue d'une extrémité d'une pièce extrudée par une réalisation de l'outil d'extrusion selon l'invention, et
- la figure 7b illustre une vue en trois dimensions de la pièce extrudée par cette réalisation de l'outil d'extrusion selon l'invention.

### Modes de réalisation de l'invention

La présente invention est décrite avec des réalisations particulières et des références à des figures mais l'invention n'est pas limitée par celles-ci. Les dessins ou figures décrits ne sont que schématiques et ne sont pas limitants.

Dans le contexte du présent document, les termes « premier » et « deuxième » servent uniquement à différencier les différents éléments et n'impliquent pas d'ordre entre ces éléments.

Sur les figures, les éléments identiques ou analogues peuvent porter les mêmes références.

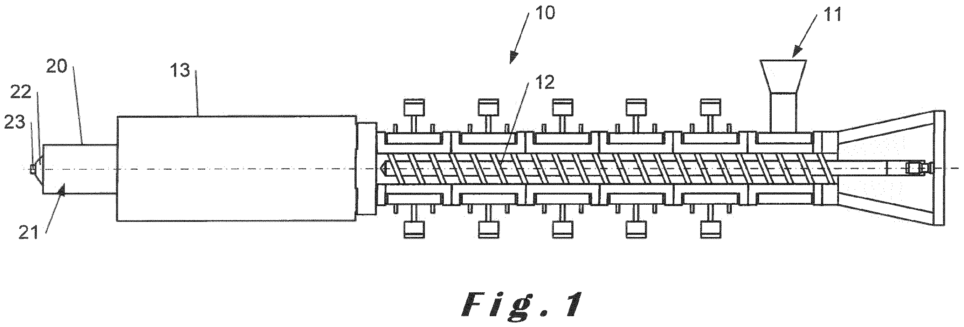

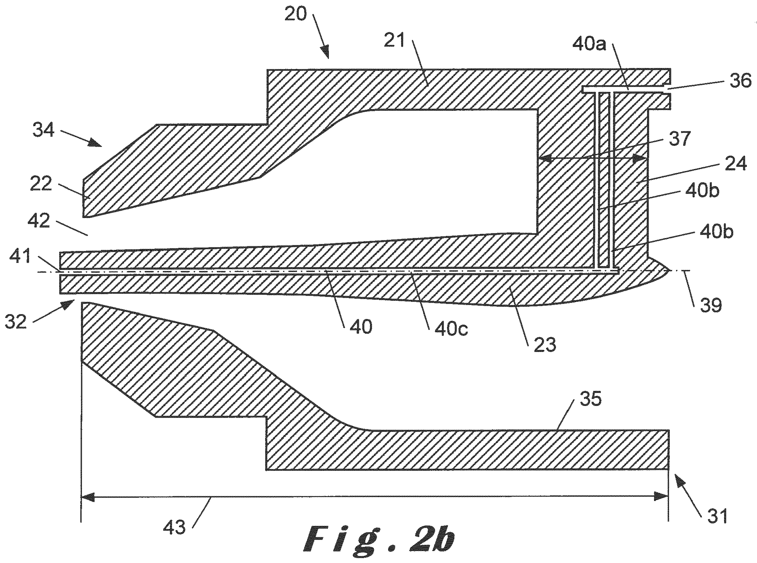

La figure 1 montre une extrudeuse 10 comprenant une entrée d'extrudeuse 11, une vis d'extrudeuse 12, un échangeur de chaleur 13 et un outil d'extrusion 20. L'outil d'extrusion 20 comprend un corps d'outil 21 creux, une filière 22 et un pointeau 23. De la matière, par exemple des granulés de plastique, est introduite dans l'extrudeuse 10 par son entrée 11. La matière est chauffée et mélangée à du gaz lors de son passage par la vis 12 puis légèrement refroidie dans l'échangeur de chaleur 13. Elle peut être encore mélangée à la sortie de l'échangeur de chaleur 13. La matière rentre alors dans l'outil d'extrusion 20. La matière peut à ce stage être un fluide mousseux. La matière passe à l'intérieur du corps d'outil 21 et sort par la filière 22. Une fois sortie de l'outil d'extrusion 20, la matière gonfle, laisse échapper du gaz et se solidifie pour créer une pièce extrudée comprenant un trou. Cette pièce extrudée peut avoir la structure d'une mousse solide. La forme extérieure de la pièce extrudée dépend de la forme de la filière 22, et en particulier d'un trou 42 (visible à la figure 2b) de la filière 22. La forme du trou de la pièce extrudée dépend de la forme du pointeau 23 et la position du trou de la pièce extrudée par rapport à la pièce extrudée dépend de la position du pointeau 23 par rapport à la filière 22.

L'outil d'extrusion 20 est préférentiellement amovible par rapport à l'extrudeuse 10. L'outil d'extrusion 20 est préférentiellement métallique.

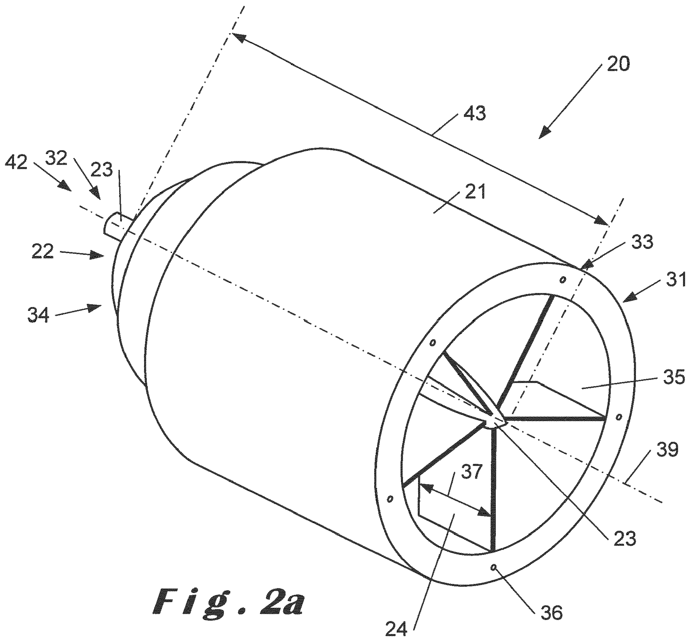

La figure 2a montre l'outil d'extrusion 20 selon une première réalisation de l'invention. L'outil d'extrusion 20 comprend le corps d'outil 21 creux, le pointeau 23 et la filière 22 déjà mentionnés, et une pluralité de bras 24.

L'outil d'extrusion 20 présente une entrée 31 par laquelle entre le flux de matière provenant de l'échangeur de chaleur 13 (figure 1). A cause de la poussée générée par la vis d'extrudeuse 12 (figure 1), le flux de matière se déplace à l'intérieur de l'outil d'extrusion 20, plus précisément, le flux de matière se déplace dans le creux du corps d'outil 21 entre une extrémité d'entrée 33 du corps d'outil 21, qui est située du côté de l'entrée 31 et par laquelle le flux de matière entre dans le corps d'outil, et une extrémité de sortie 34 du corps d'outil 21, qui est située du côté d'une sortie 32 de l'outil d'extrusion et par laquelle le flux de matière sort du corps d'outil.

Le corps d'outil 21 a une surface interne 35 qui délimite son creux. Les bras 24 couplent mécaniquement le pointeau 23 à la surface interne 35 du corps d'outil 21. Par exemple, le pointeau 23 peut être fixé à un ou plusieurs bras 24 de la pluralité de bras qui sont eux-mêmes fixés à la surface interne 35.

La surface interne 35 du corps d'outil 21 est préférentiellement cylindrique au niveau de l'extrémité d'entrée 33 du corps d'outil 21 et potentiellement aussi au niveau des bras 24. Entre les bras 24 et la filière 22, qui est située à l'extrémité de sortie 34 du corps d'outil 21, la section du creux du corps d'outil 21 se modifie pour correspondre, à l'extrémité de sortie 34 du corps d'outil 21, à la forme du trou 42 de la filière 22.

Dans le présent document, un axe 39 du corps d'outil 21 est une droite prolongeant un axe du cylindre formé par la surface interne 35 du corps d'outil 21 à l'extrémité d'entrée 33 du corps d'outil 21, c'est-à-dire un axe de révolution de ce cylindre. Puisque la section le creux du corps d'outil 21 n'est pas nécessairement constante sur toute la longueur du corps d'outil 21, il est possible qu'à d'autres endroits qu'à l'extrémité d'entrée 33, l'axe 39 ne soit pas stricto senso un axe de révolution du corps d'outil.

Le pointeau 23 s'étend jusqu'à la sortie 32 et dépasse préférentiellement du corps d'outil 21 en passant par le trou 42 de la filière 22. Le pointeau 23 est préférentiellement parallèle à l'axe 39. Préférentiellement, le pointeau 23 s'étend jusqu'à l'entrée 31.

Selon un mode de réalisation de l'invention, le pointeau 23 dépasse l'entrée 31.

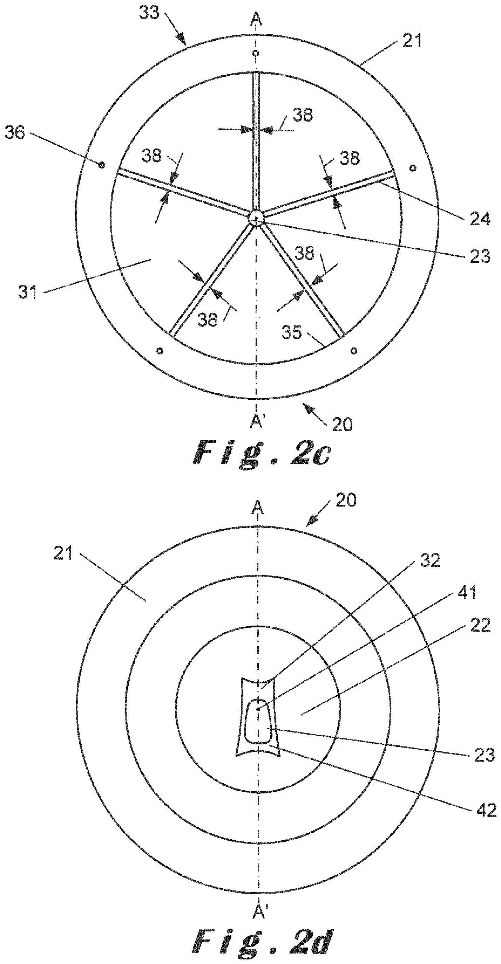

Les bras 24 sont préférentiellement situés dans le creux du corps d'outil 21 et préférentiellement placés à proximité de l'entrée 31, c'est-à-dire à proximité de l'extrémité d'entrée 33 du corps d'outil 21, de façon à ce qu'il existe un espace entre les bras 24 et la filière 22 qui est située à l'extrémité de sortie 37 du corps d'outil 21. Chaque bras 24 a une longueur 37, cette longueur 37 étant mesurée selon une direction essentiellement parallèle à une direction s'étendant d'entrée 31 à la sortie 32 de l'outil 20, c'est-à-dire parallèle à l'axe 39. Chaque bras 24 a aussi une épaisseur 38 (visible à la figure 2c), qui est une dimension minimale du bras 24 déterminée dans une direction perpendiculaire à la longueur 34. Tous les bras 24 d'un outil d'extrusion 20 ont préférentiellement la même épaisseur 38 et la même longueur 37.

Durant le passage du flux de matière dans l'outil d'extrusion 20, la forme du flux de matière est d'abord modifiée par le pointeau 23 qui crée un trou dans le flux de matière et par les bras 24 qui divisent le flux de matière en plusieurs sous-flux parallèles. La matière ayant une certaine viscosité, juste après les bras 24, les sous-flux de matière sont séparés par une distance égale à l'épaisseur 38 des bras 24. Les sous-flux comblent cette distance en se rejoignant au fur et à mesure que le flux de matière progresse vers la sortie 32 dans le creux du corps d'outil 21, le trou dans le flux de matière dû au pointeau 23 étant lui toujours présent puisque le pointeau 23 s'étend jusqu'à la sortie 32 de l'outil. Après les bras 34, la forme du creux du corps d'outil 21 se modifiant, par exemple se rétrécissant, la forme extérieure du flux de matière se modifie pour correspondre, à l'extrémité de sortie 34 du corps d'outil 21, à la forme de la filière 22, et en particulier, à la forme du trou 42 de filière. La forme du trou dans le flux de matière est, quant à elle, donnée par la forme du pointeau 23 à l'extrémité de celui-ci correspondant à la sortie de l'outil d'extrusion 20.

Selon un mode de réalisation de l'invention, les bras 24 et le pointeau 23 dépassent l'entrée 31 du corps d'outil 21. Cela permet d'augmenter la distance entre les bras 24 qui déforment le flux de matière et la filière 22.

L'outil d'extrusion 20 présente préférentiellement une longueur 43 qui correspond à la distance, mesurée selon une direction essentiellement parallèle à une direction s'étendant de l'entrée 31 à la sortie 32, entre son l'extrémité d'entrée 33 et le trou 42 de filière, de moins de 15cm, plus préférentiellement de moins de 10cm.

La surface interne 35 du corps d'outil 21 a une extension maximale en ligne droite au niveau de l'extrémité d'entrée 33 du corps d'outil 21 qui est égale à au diamètre de la surface interne 35 dans le cas où la surface interne 35 est cylindrique.

Selon un mode de réalisation de l'invention, la longueur 43 du corps d'outil 21 vaut au moins 0,7 fois l'extension maximale en ligne droite de la surface interne 35 au niveau de l'extrémité d'entrée 33. Selon un mode de réalisation de l'invention, la longueur 43 du corps d'outil 21 vaut au moins une fois l'extension maximale en ligne droite de la surface interne 35 au niveau de l'extrémité d'entrée 33.

Selon un mode de réalisation de l'invention, la longueur 43 du corps d'outil 21 vaut au plus 3,5 fois l'extension maximale en ligne droite de la surface interne 35 au niveau de l'extrémité d'entrée 33.

La figure 2a montre aussi des entrées 36 de canal qui sont décrites plus loin en faisant référence à la figure 2b.

La figure 2b montre une coupe longitudinale de l'outil d'extrusion 20 selon la première réalisation de l'invention et illustre notamment le trou 42 de filière. Outre les éléments déjà mentionnés dans la description de la figure 2a, la figure 2b illustre un canal 40 destiné à transporter un flux de gaz. L'entrée 36 du canal se situe à l'extrémité d'entrée 33 du corps d'outil 21 et est prévue pour être connectée à un autre canal transportant un flux de gaz quand l'outil d'extrusion 20 est mis en place dans l'extrudeuse 10. Le canal 40 comporte une sortie 41 située à l'extrémité du pointeau 23 correspondant à la sortie de l'outil d'extrusion 20. Le canal 40 comporte préférentiellement trois parties connectant l'entrée 36 et la sortie 41 de façon fluidique: une première partie 40a connectée à l'entrée 36 et située dans le corps d'outil 21, une deuxième partie 40b située dans le bras 24 et une troisième partie 40c située dans le pointeau 23 et connectée à la sortie 41, la deuxième partie 40b reliant la première partie 40a et la troisième partie 40c puisque le bras 24 relie le corps d'outil 21 et le pointeau 24.

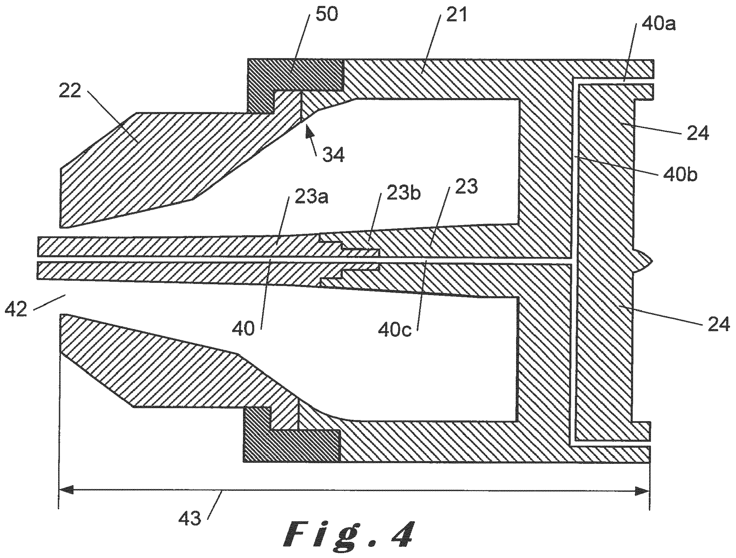

L'outil d'extrusion 21 comporte préférentiellement une deuxième partie 40b de canal par bras 24, chaque deuxième partie 40b de canal étant connectée, d'une part, à un première partie 40a de canal et, d'autre part, à la même troisième partie 40c de canal, comme visible à la figure 4. L'outil d'extrusion 21 comporte donc préférentiellement un nombre de premières parties 40a de canal et un nombre de deuxièmes parties 40b de canal égaux à son nombre de bras 24. Il est possible que la deuxième partie 40b de canal soit formée de deux passages parallèles comme visible à la figure 2b, de façon à obtenir une surface d'écoulement assez grande dans la deuxième partie 40b de canal malgré la faible épaisseur des bras 40 de l'outil d'extrusion 21 selon l'invention.

La filière 22 n'est pas nécessairement symétrique par rapport à l'axe 39 ou au pointeau 23. Il est par exemple visible à la figure 2b que le trou 42 de la filière 22 est plus grand d'un côté de l'axe 39 que de l'autre.

La figure 2c montre une vue de l'entrée 33 de l'outil d'extrusion 20 selon la première réalisation de l'invention qui reprend différents éléments déjà mentionnés, dont l'épaisseur 38 des bras 24. Un segment de droite A-A' indique la coupe illustrée à la figure 2b.

La figure 2d montre une vue de la sortie 34 de l'outil d'extrusion 20 selon la première réalisation de l'invention, qui reprend différents éléments déjà mentionnés, dont le trou 42 dans la filière 22 et la sortie 41 du canal qui est située dans l'extrémité du pointeau 23 correspondant à la sortie de l'outil d'extrusion 20. Le segment de droite A-A' indique la coupe illustrée à la figure 2b.

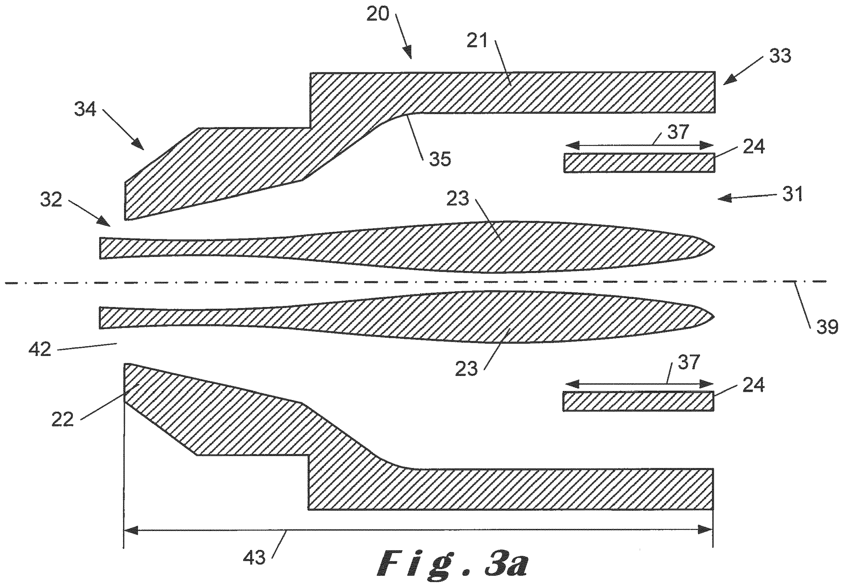

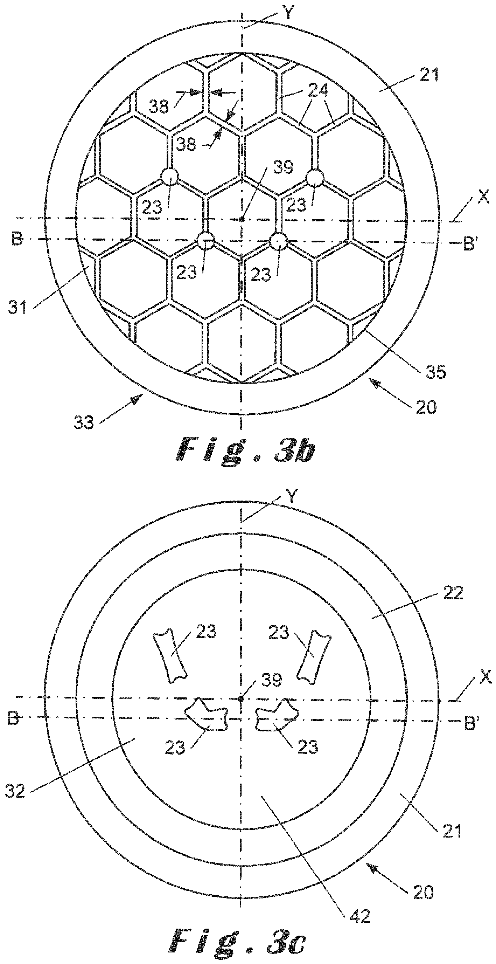

Les figures 3a, 3b et 3c montrent des vues de l'outil d'extrusion 20 selon une deuxième réalisation de l'invention.

La figure 3a montre une coupe longitudinale de l'outil d'extrusion 20 selon une deuxième réalisation de l'invention. La figure 3b montre une vue de l'entrée 33 de l'outil d'extrusion 20 selon une deuxième réalisation de l'invention. La figure 3c montre une vue de la sortie 34 de l'outil d'extrusion 20 selon une deuxième réalisation de l'invention. Un segment B-B' indique, sur les figures 3b et 3c, la coupe illustrée à la figure 3a.

Dans la deuxième réalisation de l'invention, l'outil d'extrusion 20 comporte quatre pointeaux 23. Si on définit un axe X comme étant essentiellement horizontal quand l'outil d'extrusion 20 est placé dans l'extrudeuse 10, croisant l'axe 39 et perpendiculaire à l'axe 39, et un axe Y comme étant perpendiculaire à l'axe X, croisant l'axe 39 et perpendiculaire à l'axe 39, les pointeaux sont décalés en X et en Y par rapport à l'axe 39. Dans cet exemple, les pointeaux sont essentiellement parallèles à l'axe 39, mais ils pourraient tout aussi bien être au moins en partie inclinés par rapport à l'axe 39. Il est aussi possible, tout en restant dans le cadre de l'invention, qu'un premier pointeau 23 ne soit pas décalé par rapport à l'axe 39 alors qu'un deuxième pointeau 23 est décalé en X, en Y ou en (X,Y) par rapport à l'axe 39.

Alternativement, si on considère une première direction perpendiculaire à l'axe 39, et une deuxième direction différente de la première direction et perpendiculaire à l'axe 39, un premier pointeau 23 peut être décalé dans la première direction et un deuxième pointeau 23 peut être décalé dans la deuxième direction. Dans un tel cas, les deux pointeaux 23 et l'axe 39 ne se trouvent pas dans un même plan.

Revenant à la deuxième réalisation de l'invention, les pointeaux 23 sont couplés mécaniquement à la surface interne 35 du corps d'outil 21 par la pluralité de bras 24 qui forment un réseau en hexagones. Il est possible, tout en restant dans le cadre de l'invention, que la pluralité de bras 24 forme n'importe quel type de structure permettant le couplage mécanique d'un ou plusieurs pointeau(x) à la surface interne 35 du corps d'outil 21.

Une pièce extrudée par l'outil d'extrusion selon la deuxième réalisation de l'invention a quatre trous, chaque trou correspondant à un pointeau 23.

La figure 4 montre une coupe longitudinale de l'outil d'extrusion 20 selon une troisième réalisation de l'invention. Le pointeau 23 comprend deux parties : un partie fixe 23b qui est d'un seul tenant avec les bras 24 et le corps d'outil 21, et une partie amovible 23a qui est fixée à la partie fixe 23b de façon à pouvoir en être détachée. Par exemple, la partie amovible 23a peut être vissée dans la partie fixe 23b.

Le canal 40 se prolonge entre la partie fixe 23b et la partie amovible 23a. L'outil d'extrusion 21 comporte une deuxième partie 40b de canal par bras 24, chaque deuxième partie 40b de canal étant connectée, d'une part, à un première partie 40a de canal et, d'autre part, à la même troisième partie 40c de canal.

La filière 22 est amovible par rapport au corps d'outil 21. Un moyen de fixation 50, comportant par exemple un ou plusieurs écrous de fixation, fixe la filière 22 au corps d'outil 21 de façon à ce que la filière 22 puisse être détachée du corps d'outil 21. Le moyen de fixation 50 est préférentiellement tel que la position de la filière 22 puisse être ajustée via ce moyen de fixation, de façon à pouvoir positionner le trou de filière 42 par rapport au pointeau 23 pour obtenir la forme requise pour la pièce extrudée.

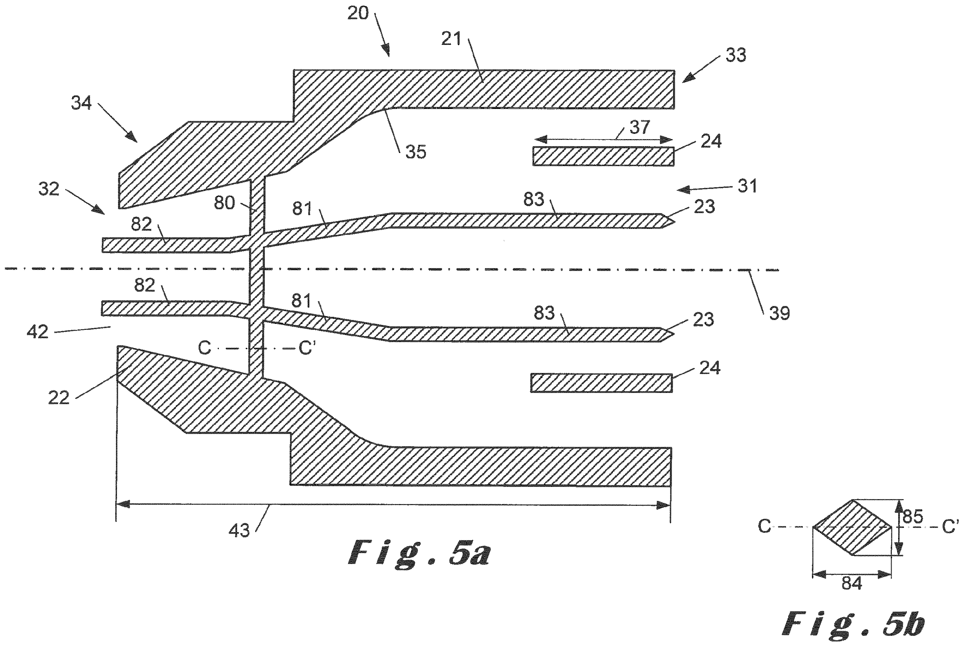

La figure 5a illustre une quatrième réalisation de l'invention, dans laquelle l'outil d'extrusion 20 comprend une traverse 80 de stabilisation des pointeaux 23. La figure 5b est une coupe de la traverse 80 selon le plan C-C' indiqué à la figure 5a.

La traverse 80 couple mécaniquement le pointeau 23 au corps d'outil 21 creux et est située dans le creux du corps d'outil 21 creux et couplée mécaniquement à la surface interne 35 et au pointeau 23.

La traverse 80 est un moyen de stabilisation des pointeaux 23. La traverse 80 est particulièrement utile lorsque les pointeaux 23 comprennent au moins une partie 81 inclinée par rapport à l'axe 39, notamment lorsque l'angle entre cette partie inclinée 81 et l'axe 39 est entre 5° et 38°. En effet, la pression que le flux de matière passant dans l'outil d'extrusion 20 exerce sur la partie inclinée 81 du pointeau pourrait faire bouger le pointeau 23. La traverse 80 permet d'empêcher un tel mouvement ou une telle déformation du pointeau. Des pointeaux 23 ne comportant pas de partie faisant un angle d'au moins 5° avec l'axe 39 ne sont préférentiellement pas fixés à une traverse 80, bien qu'ils puissent l'être.

La traverse 80 peut être aussi utilisée dans une réalisation de l'invention comprenant un seul pointeau 23.

Dans la réalisation de la figure 5a, les pointeaux 23 comprennent, en plus de la partie inclinée 81, une première partie 83 et une deuxième partie 82 qui sont essentiellement parallèles à l'axe 39. Dans une autre réalisation de l'invention, l'ensemble du pointeau 23 est incliné par rapport à l'axe 39.

Dans une réalisation de l'invention comportant plusieurs pointeaux, certains pointeaux 23, par exemple ceux comportant une partie inclinée 81, peuvent être fixés par une ou plusieurs traverses 80, alors que d'autres pointeaux 23, par exemple ceux qui sont essentiellement parallèle à l'axe 39, ne sont pas fixés à une traverse 80.

La traverse 80 ne comporte préférentiellement pas de canal 40 destiné à transporter un flux de gaz.

La traverse 80 et préférentiellement d'un seul tenant avec le pointeau, les bras et le corps d'outil.

La traverse 80 est située en aval des bras 24 et en amont de la filière 22 par rapport au flux de matière. La position de la traverse 80 dans le corps d'outil 21 est choisie en fonction de deux contraintes. La première contrainte est que la traverse 80 soit positionnée de façon à empêcher une déformation du pointeau sous l'effet de la pression du flux de matière. La traverse 80 est donc préférentiellement fixée à la partie inclinée 81 du pointeau, et si possible à proximité de l'extrémité de la partie inclinée 81 la plus proche de la sortie 32. La deuxième contrainte est que la traverse 80 soit suffisamment éloignée de la sortie 32 pour que le flux de matière, qui est divisé par sa présence, puisse se reformer. Par exemple, la traverse 80 peut être placée entre 10 et 20 mm de la sortie 32.

La figure 5b indique une longueur 84 et une épaisseur 85 de la traverse. La longueur 84 est préférentiellement entre 1,5 et 2,5mm et l'épaisseur 85 est préférentiellement entre 0,3 et 0,5mm. Une telle épaisseur 85 de la traverse 85 permet que sa présence ne perturbe que très peu le flux de matière. La traverse 85 a préférentiellement une section choisie de façon à ne perturber qu'un minimum le flux de matière, par exemple en losange comme montré à la figure 5b.

Une ou plus des caractéristiques suivantes, même si elles ont pu être illustrées dans les figures comme correspondant à des réalisations différentes de l'invention, peuvent être combinées entre elles et avec les différentes réalisations de l'invention décrites tout en restant dans le cadre de l'invention:
- présence de plusieurs pointeaux 23 ou d'un seul pointeau 23,
- présence ou pas d'un canal 40 destiné à conduire du gaz et allant d'une extrémité à l'autre de l'outil d'extrusion,
- décalage d'un ou plusieurs pointeaux 23 par rapport à l'axe 39 du corps d'outil 21,
- décalage d'un ou plusieurs pointeaux 23 par rapport à l'axe X et/ou l'axe Y,
- angle d'un ou plusieurs pointeaux 23 par rapport à l'axe 39,
- traverse 80 de stabilisation d'un ou plusieurs pointeaux 23,
- filière 22 amovible ou d'un seul tenant avec le corps d'outil 21, et/ou
- pointeau 23 partiellement ou totalement amovible ou d'un seul tenant avec le corps d'outil 21.

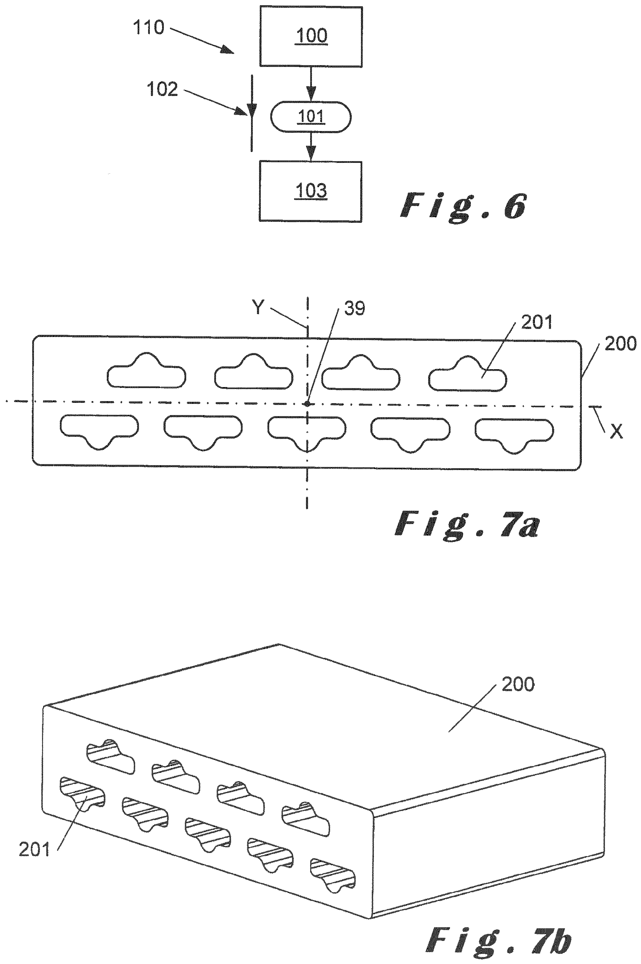

La figure 6 illustre les étapes d'un procédé 110 de fabrication par impression 3D de l'outil d'extrusion 20 selon l'invention.

Lors d'une étape de conception 100, un modèle de l'outil d'extrusion 20 est créé, sur un ordinateur, à l'aide par exemple d'un logiciel de conception assistée par ordinateur. Ce modèle, ou tout au moins des caractéristiques de l'outil d'extrusion que le modèle représente, sont reprises dans un fichier 101. Ce fichier 101 est transféré 102 depuis l'ordinateur vers une imprimante 3D qui réalise une impression tridimensionnelle 103 de l'outil d'extrusion ou d'une partie de l'outil d'extrusion.

Dans une réalisation de l'invention, l'ordinateur est intégré dans l'imprimante 3D et le transfert 102 est un transfert d'information à l'intérieur de l'ordinateur.

Dans une réalisation de l'invention, l'imprimante 3D commence l'impression 103 alors que seule une partie du fichier 101 est transférée, et le transfert 102 continue pendant l'impression 103.

Les figures 7a et 7b illustrent un exemple de pièce extrudée 200 réalisée par extrusion en utilisant une réalisation de l'outil d'extrusion 20 selon l'invention. La pièce extrudée 200 comporte neuf trous 201, chacun des trous 201 correspondant à un pointeau 23 de l'outil d'extrusion 20 qui a servi à fabriquer la pièce extrudée 200. La figure 7a indique, par rapport à la pièce extrudée 200, la position des axes X et Y et la position de l'axe 39 lors de l'extrusion. Les trous 201 sont décalés en X et/ou en Y par rapport à l'axe 39 car les pointeaux 23 correspondant à ces trous 201 étaient décalés en X et/ou en Y par rapport à l'axe 39.

En d'autres termes, l'invention se rapporte à un outil d'extrusion 20 qui comporte un corps d'outil 21, une filière 22, un ou plusieurs pointeaux 23 et des bras 24 servant à fixer le pointeau 23 au corps d'outil 21. Les bras 24 sont particulièrement minces, de façon à minimiser la déformation d'un flot de matière passant dans l'outil d'extrusion, ce qui permet à l'outil d'extrusion 20 d'être particulièrement petit et léger. En outre, les pointeaux peuvent être décalés par rapport à un axe 39 de révolution d'une surface interne du corps d'outil 21. L'outil d'extrusion 20 selon l'invention est préférentiellement fabriqué par impression 3D.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Outil d'extrusion (20) pour extruder une matière et comprenant:
• une entrée (31) pour recevoir un flux de matière,
• une sortie (32) pour permettre une sortie dudit flux de matière au-dehors dudit outil d'extrusion (20),
ledit outil d'extrusion (20) comprenant:
• un corps d'outil (21) creux ayant:
∘ une extrémité d'entrée (33) pour permettre au flux de matière d'entrer dans ledit corps d'outil (21) creux,
∘ une extrémité de sortie (34) pour permettre au flux de matière de sortir dudit corps d'outil (21) creux,
∘ une surface interne (35) délimitant au moins partiellement le creux dudit corps d'outil (21) creux,
• un pointeau (23) situé au moins partiellement dans le creux dudit corps d'outil (21) creux, et s'étendant jusqu'à ladite sortie (32) de l'outil d'extrusion (20),
• une pluralité de bras (24) pour coupler mécaniquement ledit pointeau (23) audit corps d'outil (21) creux, chacun desdits bras (24) étant situé au moins partiellement dans le creux dudit corps d'outil (21) creux et couplé mécaniquement à ladite surface interne (35) et audit pointeau (23), chaque bras (24) ayant une épaisseur (38),
• une filière (22) située à ladite extrémité de sortie (34) dudit corps d'outil (21) creux et destinée à mettre en forme, avec ledit pointeau (23), ledit flux de matière à ladite sortie (32) de l'outil d'extrusion (20),
**caractérisé en ce que** l'outil d'extrusion (20) présente une longueur (43) d'au moins 0,7 fois une extension maximale en ligne droite de la surface interne (35) du corps d'outil (21) au niveau de l'extrémité d'entrée (33) du corps d'outil (21), la longueur (43) de l'outil d'extrusion (20) étant mesurée selon une direction essentiellement parallèle à une direction s'étendant de l'entrée (31) à la sortie (32) et l'extension maximale en ligne droite de la surface interne (35) étant mesurée selon une direction perpendiculaire à la direction de mesure de la longueur (43), et **en ce que** ladite épaisseur (38) de chaque bras (24) est inférieure à 4mm, préférentiellement l'épaisseur (38) de chaque bras (24) est inférieure à 2mm, plus préférentiellement l'épaisseur (38) de chaque bras (24) est inférieure à 1mm, de sorte que l'outil d'extrusion (20) est apte à extruder une matière mousseuse.

2. Outil d'extrusion (20) selon l'une quelconque des revendications précédentes, comprenant un canal (40) destiné à transporter une flux de gaz et partant de l'extrémité d'entrée (33) du corps d'outil (21), passant par un bras (24), passant par le pointeau (23) et débouchant du pointeau (23) à la sortie (32) de l'outil d'extrusion (20).

3. Outil d'extrusion (20) selon l'une quelconque des revendications précédentes, dans lequel le pointeau (23), les bras (24) et le corps d'outil (21) sont d'un seul tenant.

4. Outil d'extrusion (20) selon l'une quelconque des revendications précédentes, dans lequel la filière (22) et le corps d'outil (21) sont d'un seul tenant.

5. Outil d'extrusion (20) selon l'une quelconque des revendications précédentes, comprenant une pluralité de pointeaux (23), chaque pointeau (23) étant couplé mécaniquement à la surface interne (35) du corps d'outil (21) creux par au moins un bras (24) de la pluralité de bras (24).

6. Outil d'extrusion selon l'une quelconque de revendications précédentes, comprenant en outre une moyen de stabilisation (80) du pointeau (23) couplant mécaniquement ledit pointeau (23) audit corps d'outil (21) creux, ledit moyen de stabilisation (80) étant situé dans le creux dudit corps d'outil (21) creux et couplé mécaniquement à ladite surface interne (35) et audit pointeau (23).

7. Outil d'extrusion (20) selon l'une quelconque des revendications précédentes, dans lequel à l'extrémité d'entrée (33) du corps d'outil (21), la surface interne (35) du corps d'outil (21) est essentiellement un cylindre.

8. Outil d'extrusion (20) selon la revendication 7, dans lequel le pointeau (23) est essentiellement parallèle à un axe (39) de révolution dudit cylindre.

9. Outil d'extrusion (20) selon la revendication 8, dans lequel le pointeau (23) est décalé par rapport à l'axe (39) de révolution dudit cylindre.

10. Outil d'extrusion (20) selon la revendication 9, dans lequel un premier pointeau (23) est décalé dans une première direction par rapport à l'axe (39) de révolution dudit cylindre et un deuxième pointeau (23) est décalé dans une deuxième direction, différente de la première direction, par rapport à l'axe (39) de révolution dudit cylindre, la première et la deuxième directions étant perpendiculaires à l'axe (39) de révolution dudit cylindre.

11. Outil d'extrusion (20) selon la revendication 7, dans lequel au moins une partie (81) du pointeau (23) fait un angle entre 5° et 38° avec un axe (39) de révolution dudit cylindre.

12. Outil d'extrusion (20) selon l'une quelconque des revendications précédentes, dans lequel une partie de l'outil d'extrusion (20) est fabriquée par une méthode de type impression 3D, préférentiellement tout l'outil d'extrusion (20) est fabriqué par impression 3D.

13. Méthode d'utilisation d'un outil d'extrusion (20) selon l'une quelconque des revendications précédentes pour la fabrication d'une pièce extrudée en mousse.

14. Méthode d'utilisation selon la revendication précédente, comprenant:
• la fourniture d'un outil d'extrusion (20) selon la revendication 2 ou selon l'une quelconque des revendications 3 à 12 lorsque cette revendication dépend de la revendication 2, et
• l'introduction d'un flux de matière mousseuse par l'entrée (31), et l'introduction d'un flux de gaz dans le canal (40) de façon à créer un transport de gaz depuis une entrée (36) du canal (40) située à l'extrémité d'entrée (33) du corps d'outil (21) vers une sortie (41) du canal (40) située dans le pointeau (23) à la sortie (32) de l'outil d'extrusion (20).

15. Procédé de fabrication (110) d'un outil d'extrusion (20) comprenant les étapes de:
• conception (100) de l'outil d'extrusion (20) par conception assistée par ordinateur pour créer un fichier (101) comprenant des caractéristiques de l'outil d'extrusion (20),
• transfert (102) du fichier (101) de l'ordinateur vers une imprimante 3D, et
• impression tridimensionnelle (103) de l'outil d'extrusion (20) par l'imprimante 3D.
